(19) **Europäisches Patentamt**

**European Patent Office**

**Office européen des brevets**

(11) **EP 0 788 303 B1**

(12) **FASCICULE DE BREVET EUROPEEN**

(45) Date de publication et mention
de la délivrance du brevet:
**17.10.2001 Bulletin 2001/42**

(21) Numéro de dépôt: **96927118.8**

(22) Date de dépôt: **31.07.1996**

(51) Int Cl.⁷: **A01F 29/00**, A01K 5/00,
A01F 25/20, A01D 75/20,
A01F 29/16

(86) Numéro de dépôt international:
**PCT/FR96/01211**

(87) Numéro de publication internationale:
**WO 97/04639 (13.02.1997 Gazette 1997/08)**

(54) **MACHINE DE DISTRIBUTION ET/OU DE MELANGE D'ALIMENTS FOURRAGERS AVEC UN DISPOSITIF DE SECURITE**

FUTTERMISCH- UND VERTEILMASCHINE MIT EINER SICHERHEITSEINRICHTUNG

FEED DISPENSING AND/OR MIXING MACHINE WITH A SAFETY DEVICE

(84) Etats contractants désignés:
**AT BE CH DE DK ES FI FR GB GR IE IT LI LU MC NL PT SE**

(30) Priorité: **31.07.1995 FR 9509317**

(43) Date de publication de la demande:
**13.08.1997 Bulletin 1997/33**

(73) Titulaire: **JEANTIL S.A.**
**F-35590 l'Hermitage (FR)**

(72) Inventeur: **JEANTIL, Philippe**
**F-35310 Mordelles (FR)**

(74) Mandataire: **Obolensky, Michel et al**
**c/o CABINET LAVOIX**
**2, place d'Estienne d'Orves**
**75441 Paris Cédex 09 (FR)**

(56) Documents cités:
**EP-A- 0 551 044**     **EP-A- 0 558 430**
**DE-A- 2 724 322**     **FR-A- 2 714 568**
**US-A- 4 759 185**

## Description

La présente invention concerne les machines de distribution et/ou de mélange d'aliments fourragers et se rapporte plus particulièrement aux machines du type comportant des moyens de chargement et/ou de fermeture par l'arrière, un fond mobile de déplacement des produits chargés dans la machine vers l'avant de celle-ci et un dispositif de démêlage et/ou de mélange des produits.

Une machine de ce type est décrite notamment dans FR-A-2 714 568 déposée le 31 décembre 1993 par la demanderesse.

Les machines de ce type sont très efficaces mais elles ne sont pas dépourvues de certains dangers notamment en raison des possibilités d'accès à l'espace de chargement de la machine lorsque le rotor de celle-ci est en rotation.

C'est la raison pour laquelle pour répondre à la norme européenne EN703 du 20 mars 1995 concernant la Directive Machines Européennes pour toute désileuse pailleuse à griffe, la mise en fonctionnement du rotor ne doit être possible que lorsque la griffe est en position fermée.

L'invention vise donc à créer un dispositif de sécurité pour machine désileuse pailleuse susceptible de répondre aux directives énoncées dans la norme précitée.

Elle a donc pour objet une machine de distribution et/ou de mélange d'aliments fourragers comprenant une caisse sur laquelle sont montés des moyens de chargement et/ou de fermeture de la caisse, des moyens d'actionnement des moyens de chargement et/ou de fermeture , des moyens de démêlage des produits contenus dans la caisse, des moyens d'actionnement des moyens de démêlage, et un dispositif de sécurité comportant des moyens de détection capables de détecter l'état de fonctionnement ou d'arrêt des moyens de démêlage, des moyens de détection capables de détecter la position et/ou l'état des moyens de chargement et/ou de fermeture et des moyens de commande destinés à interdire l'accès à l'intérieur de la caisse par action sur les moyens de chargement et/ou de fermeture lors du fonctionnement des moyens de démêlage et à autoriser l'accès à l'intérieur de la caisse par action sur les moyens de chargement et/ou de fermeture lors de l'arrêt des moyens de démêlage.

Suivant d'autres caractéristiques de l'invention:

- les moyens de démêlage comprenant une turbine entraînée en rotation à partir de la prise de force d'un tracteur associé à la désileuse pailleuse, les moyens de détection de l'état de fonctionnement ou d'arrêt des moyens de démêlage comportent un détecteur de rotation de la turbine, et les moyens de chargement et/ou de fermeture comprenant une porte articulée sur la caisse au moyen de bras, le dispositif comporte des moyens de détection de la position d'ouverture ou de fermeture de la porte comprenant au moins un capteur de bras;

- les moyens de détection de la position d'ouverture ou de fermeture de la porte comportent en outre au moins un capteur de porte;

- les capteurs de bras et de porte sont des contacteurs;

- les moyens de détection de l'état de fonctionnement ou d'arrêt des moyens de démêlage et les moyens de détection d'ouverture ou de fermeture de la porte sont connectés à au moins à un relais électromagnétique qui fait partie des moyens de commande destinés à interdire l'ouverture de la porte lors du fonctionnement des moyens de démêlage;

- les moyens d'actionnement de la porte comprenant au moins un vérin de déplacement des bras d'articulation de la porte sur la caisse de la machine et au moins un vérin de déplacement de la porte par rapport aux bras et des distributeurs hydrauliques de commande desdits vérins, tandis que les moyens d'actionnement des moyens de démêlage comportant au moins la prise de force d'un tracteur associé à la machine et assurant l'entraînement en rotation de la turbine par l'intermédiaire d'une boîte de vitesses actionnée par un levier de changement de vitesses, les moyens de commande destinés à interdire l'ouverture de la porte lors du fonctionnement des moyens de démêlage comprennent un distributeur de chargement à commande électrique connecté électriquement au relais électromagnétique et branché dans le circuit hydraulique d'alimentation des distributeurs hydrauliques de commande des vérins d'actionnement des bras et de la porte ainsi que dans le circuit hydraulique d'alimentation d'un vérin de débrayage à l'arrêt de la boîte de vitesses, interposé entre le levier de changement de vitesses et ladite boîtes de vitesses;

- les moyens de démêlage comprenant en outre un démêleur tournant entraîné par un moteur hydraulique sous la commande d'un distributeur hydraulique, le dispositif de sécurité comporte en outre une vanne à commande électromagnétique commandée par le relais électromagnétique et branchée dans le circuit hydraulique d'alimentation du moteur hydraulique d'entraînement du démêleur tournant afin d'interdire l'alimentation dudit moteur hydraulique en présence d'une commande d'ouverture de la porte délivrée par le distributeur de chargement aux distributeurs hydrauliques de commande des vérins d'actionnement de la porte et des bras d'articulation de celle-ci sur la caisse de la machine;

- la machine comportant en outre un fond mobile entraîné par un moteur hydraulique sous la commande d'un distributeur hydraulique, la vanne à commande électromagnétique est également branchée dans le circuit hydraulique d'alimentation du moteur hydraulique d'entraînement du fond mobile afin d'interdire l'alimentation dudit moteur hydraulique en présence d'une commande d'ouverture de la porte délivrée par le distributeur de chargement aux distributeurs hydrauliques de commande des vérins d'actionnement de la porte et des bras d'articulation de celle-ci sur la caisse de la machine;

- le distributeur de chargement comporte au moins un bobinage commandé par le relais à commande électromagnétique pour assurer la commutation entre l'alimentation des distributeurs hydrauliques de commande des vérins d'actionnement de la porte et des bras et celle du vérin hydraulique de blocage au point mort de la boîte de vitesses;

- le distributeur de chargement comporte en outre un second bobinage commandé par le relais à commande électromagnétique pour assurer l'interdiction de débrayage de la turbine en cours de rotation de celle-ci;

- le vérin de débrayage à l'arrêt de la boîte de vitesses comporte un corps pourvu de deux chambres d'extrémités alimentées en fluide hydraulique par l'intermédiaire du distributeur de chargement et dans chacune desquelles est monté déplaçable un piston, lesdits pistons définissant la course d'un piston baladeur monté déplaçable dans une chambre centrale et relié à une pièce de déplacement d'un pignon de changement de rapport de la boîte de vitesses, reliée mécaniquement au levier de changement de vitesses, les pistons montés dans les chambres d'extrémités assurant sous la commande du distributeur de chargement, en fonction de la position des bras et de la porte ainsi que de l'état de la turbine, le blocage du piston baladeur au moins dans une position correspondant au point mort de la boîte de vitesses lorsque la turbine est immobile;

- les pistons montés dans les chambres d'extrémités assurent également le blocage du piston baladeur dans une position correspondant à l'engagement d'un rapport de la boîte de vitesses tant que la turbine est en rotation.

L'invention sera mieux comprise à la lecture de la description qui va suivre, donnée uniquement à titre d'exemple et faite en se référant aux dessins annexés, sur lesquels :

- la Fig.1 est un schéma d'une machine avec un dispositif de sécurité suivant l'invention;
- la Fig.2 est une vue en coupe détaillée du vérin de débrayage de la boîte de vitesses de la machine, entrant dans la construction du dispositif de sécurité suivant l'invention; et
- la Fig.3 est un schéma d'une variante du dispositif de sécurité de la figure 1.

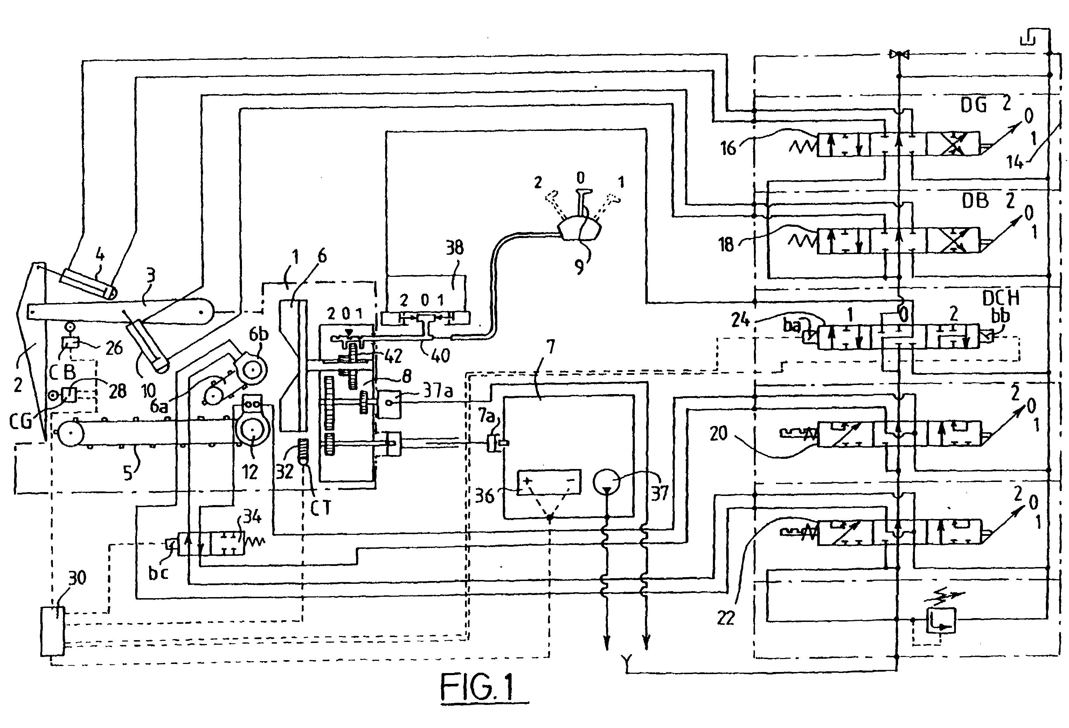

La description qui va suivre prend pour exemple une machine désileuse pailleuse représentée schématiquement à la figure 1.

Cette machine comporte une caisse 1 représentée en trait mixte, équipée d'une griffe 2 de préhension et de chargement dans la caisse de produit sous forme d'ensilage, de balles cylindriques, parallélépipédiques ou autres.

Cette griffe 2 fait donc également office de porte arrière pour la machine.

La griffe 2 est articulée sur la caisse par des bras 3 est actionnée par des vérins 4.

Dans la caisse est en outre monté un fond mobile 5 de type connu qui se déplace longitudinalement pour amener l'ensilage vers la partie avant de la caisse 1.

La machine comporte de plus un dispositif de démêlage et de distribution qui, dans le présent exemple, comporte une turbine 6, disposée verticalement en face de la griffe 2, entraînée en rotation par la prise de force d'un tracteur 7 sous la commande d'une boîte de vitesses 8 actionnée par un levier de changement de vitesses 9.

La machine peut également être une machine de distribution et/ou de mélange d'aliments fourragers autre qu'une désileuse pailleuse et qui comporte au lieu de la griffe précitée des moyens de chargement et/ou de fermeture tels que par exemple un outil escamotable notamment une fraise ou analogue.

A la turbine 6 est associé un démêleur tournant sous la forme d'un convoyeur oblique 6a qui s'étend entre le fond mobile 5 et la turbine 6 et qui est entraîné par un moteur hydraulique 6b.

Le démêleur tournant peut être également formé d'une ou plusieurs vis démêleuses ou d'un ou plusieurs tambours munis de doigts.

Les bras 3 de la griffe 2 sont actionnés par des vérins 10, tandis que le fond mobile 5 est entraîné par un moteur hydraulique 12.

Ces divers organes d'actionnement hydrauliques sont commandés par un ensemble 14 de distributeurs hydrauliques comprenant un distributeur 16 de commande des vérins 4 d'actionnement de la griffe 2, un distributeur 18 de commande des vérins 10 d'actionnement des bras 3 de la griffe, un distributeur 20 de commande du moteur hydraulique 12 d'entraînement du fond mobile 5, un distributeur 22 de commande du moteur hydraulique 6b d'entraînement du convoyeur sans fin 6a. Enfin l'ensemble 14 comporte un distributeur 24 de chargement à commande électrique qui fait partie du dispositif de sécurité suivant l'invention.

Le dispositif de sécurité comporte en outre un capteur 26 de la position des bras 3 de la griffe 2, connecté en série avec un capteur 28 de la position de la griffe 2 à une première borne d'un relais électromagnétique 30.

On entend par relais électromagnétique 30, soit un relais à contacts multiples, soit un ensemble de relais.

Les capteurs 26,28 sont avantageusement constitués par des contacteurs.

Le relais électromagnétique 30 est en outre connecté par une seconde borne à un détecteur 32 de rotation de la turbine 6.

Un détecteur de ce type peut être inductif, capacitif, magnétique, optique ou autre.

Le relais 30 coopère avec une vanne à commande électromagnétique 34 de commande du moteur hydraulique 12 d'entraînement du fond mobile 5 ainsi que du moteur hydraulique 6b d'entraînement du convoyeur oblique sans fin 6a.

Le relais 30 est alimenté par la batterie 36 du tracteur 7.

Le tracteur porte également une pompe hydraulique 37 d'alimentation en fluide des divers organes hydrauliques d'actionnement de la machine ainsi que de l'ensemble des distributeurs 14.

Le relais électromagnétique 30 est enfin relié à deux bobinages ba et bb de commande du distributeur de chargement 24.

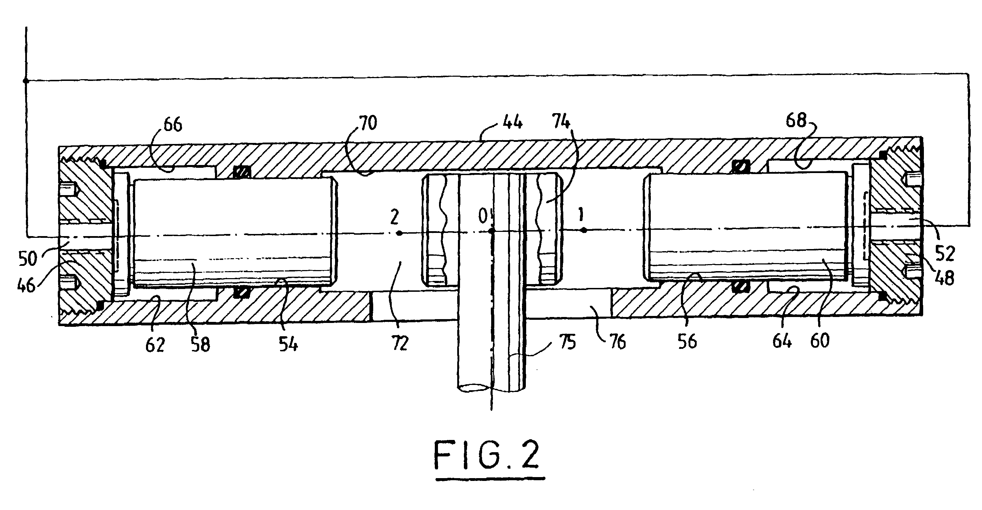

Le dispositif de sécurité peut comporter également un vérin 38 de débrayage à l'arrêt de la boîte de vitesses 8 qui sera décrit en détail en référence à la figure 2 et dont deux entrées sont connectées à une sortie du distributeur de chargement 24.

Ce vérin comporte un baladeur 40 lié mécaniquement au levier de changement de vitesses 9 et actionnant un pignon double 42 de changement de rapport de la boîte de vitesses.

Le distributeur de chargement 24 est en outre relié au distributeur 18 de commande des vérins 10 d'actionnement des bras 3 et au distributeur 16 de commande du vérin d'actionnement 4 de la griffe 2.

Le vérin 38 de débrayage à l'arrêt de la boîte de vitesses est représenté plus en détail à la figure 2.

Il comporte un corps 44 de forme générale cylindrique fermé à ses deux extrémités par deux bouchons filetés 46,48.

Dans les bouchons 46,48 sont ménagés des orifices axiaux 50,52 de liaison avec des conduites hydrauliques représentées en trait fin et reliées au distributeur de chargement 24 comme représenté à la figure 1.

A l'intérieur du corps 44, le vérin comporte des portées 54,56 dans lesquelles sont montés à coulissement des pistons correspondants 58,60. L'extrémité de chaque piston 58,60 se trouvant en regard du bouchon 46,48 correspondant, est déplaçable dans une chambre 62,64 ménagée par un alésage d'extrémité 66,68 du corps 44, le bouchon 46,48, le bord latéral de la portée 54,56 et le piston 58,60.

Les extrémités des pistons 58,60 se trouvant en regard l'une de l'autre, définissent avec un alésage central 70 du corps 44, une chambre 72 de réception d'un piston baladeur 74 comportant une tige latérale 75 traversant le corps 44 par une lumière 76 de longueur égale à la distance que doit parcourir le piston baladeur 74 de part et d'autre d'une position intermédiaire correspondant au point mort de la boîte de vitesses 8. La tige 75 assure la liaison entre le piston baladeur 74 et la pièce 40 formant baladeur de changement de rapport.

Dans le mode de réalisation qui vient d'être décrit, la source hydraulique est constituée par la pompe hydraulique 37 du tracteur 7.

On peut également utiliser une pompe hydraulique 37a embarquée sur la machine, entraînée par la boîte de vitesses 8 de celle-ci.

Bien entendu la source mécanique est la prise de force 7a du tracteur 7, commandée par l'opérateur au poste de conduite du tracteur (non représenté).

Avant de passer à la description du fonctionnement du dispositif de sécurité, il convient de rappeler que selon la norme nouvellement entrée en vigueur, mentionnée plus haut, pour une machine à griffe, la mise en fonctionnement de la turbine ou rotor, ne doit être possible que lorsque la griffe de celle-ci est en position fermée.

Sur la figure 1, le distributeur de chargement 24 est représenté dans son état pour lequel la turbine 6 n'est pas entraînée par la boîte de vitesses et dont le levier 9 se trouve au point mort.

Le vérin 38 de débrayage à l'arrêt de la boîte de vitesses et en particulier les pistons 58,60 de ce vérin (Fig.2) se trouvent dans des positions rapprochées du piston baladeur 75, empêchant une tentative de mise en route de la turbine.

Les capteurs 26 et 28 de position des bras 3 et de la griffe 2 d'une part et le détecteur 32 de la turbine 6, ne délivrant aucun courant, la sortie du relais 30 appliquée au bobinage ba du distributeur de chargement 24 est au niveau 0. Dans cette position, l'alimentation en fluide hydraulique des distributeurs 16 et 18 de commande des vérins 4 et 10 est coupée, et, la griffe 2 étant abaissée, et ne pouvant être levée, il n'est possible de tenter une mise en route de la turbine 6 qu'en alimentant le bobinage ba du distributeur de chargement.

Les conditions pour une telle mise en route sont que la prise de force 7a du tracteur soit branchée, que l'hydraulique soit connectée (tracteur ou boîte de vitesses de la machine), et que les dispositifs électriques soient connectés à la batterie 36.

Dans ce cas, le relais 30 délivre un signal à l'état 1 sur le bobinage ba du distributeur de chargement 24, ce qui assure l'alimentation en fluide des distributeurs hydrauliques 16,18 de commande des vérins 4 d'actionnement de la griffe 2 et 10 d'actionnement des bras 3 et la mise en communication avec le retour au réservoir de la conduite d'alimentation du vérin 38 de débrayage à l'arrêt de la boite de vitesses 8.

Il est alors possible de choisir entre :

1) monter les bras 3 et/ou ouvrir la griffe 4 et empêcher le démarrage de la turbine;
2) faire tourner la turbine 6 et empêcher de faire monter les bras 3 et/ou d'ouvrir la griffe 4.

Pour assurer l'élévation des bras 3 et empêcher le démarrage de la turbine 6, on actionne les distributeurs 16 et 18 pour alimenter les vérins 4 et 10. Le signal de sortie du capteur de bras 26 qui était initialement au niveau 0, passe au niveau 1, tandis que le détecteur d'état de la turbine qui était initialement à l'état 0, reste à l'état 0.

Les état des capteurs 26,28 de bras, et de griffe et du détecteur 32 de turbine étant respectivement notés CB,CG et CT, on passe pour procéder à la montée des bras 3 de la relation d'état CB0 + CT0 + ba1 + bb0 à la relation d'état CB1 + CT0 + ba1 + bb0.

Si l'on essaye alors de faire tourner la turbine 6, l'indication CT du capteur 32, doit passer de 0 à 1, ce qui doit entraîner le passage du distributeur de chargement 24 de l'état 1 auquel il se trouve, à l'état 0, situation matérialisée par DCH1 ==> DCH0.

Une telle situation serait alors matérialisée par une application de la pression sur le vérin de débrayage 38 ainsi qu'une coupure de l'alimentation des distributeurs 18 et 16 de commande des vérins 4 et 10 d'actionnement de la griffe 2 et des bras 3.

On devrait alors avoir la relation CB1 + CT1 + ba0 + bb0. Dans une telle situation, il est impossible de faire démarrer la turbine 6, car la pression hydraulique appliquée sur le vérin de débrayage 38 verrouille immédiatement celui-ci au point mort dès que le signal de sortie du détecteur 32 d'état de la turbine 6 passe de CT0 à CT1.

De plus, la vanne 34 à commande électromagnétique reçoit sur son bobinage bc, un signal de coupure du relais électromagnétique 30, ce qui interdit l'alimentation des moteurs hydrauliques 6b et 12 d'entraînement du convoyeur oblique 6a et du fond mobile 5.

Les bras 3 sont également bloqués. Il s'agit donc là d'une fausse manoeuvre entraînant un blocage général.

Pour faire tourner la turbine 6 et empêcher de faire monter les bras 3 de la griffe, le signal de sortie CB du capteur de bras 26 reste à 0. Lorsque le signal de sortie CT du détecteur 32 d'état de la turbine 6 passe de 0 à 1, on se trouve devant la situation suivante :

$$CB0 + CT1 ==> ba0 \text{ et } bb1.$$

Le passage à 1 du bobinage bb du distributeur de chargement 24, assure la mise en communication avec le réservoir de retour du vérin de débrayage 38 et la mise en communication de la pression délivrée par la pompe 37 au réservoir de retour. Cette situation se traduit par le changement d'état du distributeur de chargement 24 DCH1 ==> DCH2.

La turbine 6 continue de tourner, mais les bras 3 sont alors bloqués en position d'abaissement de la griffe.

On l'empêche toujours de démarrer dès que les bras 3 se lèvent.

Bien que dans le présent mode de réalisation, le distributeur de chargement 24 soit du type à deux bobines ba et bb, il est également possible de réaliser ce distributeur à l'aide d'un seul bobinage d'actionnement, le bobinage ba, auquel cas, la sécurité de débrayage de la turbine en rotation n'existe pas.

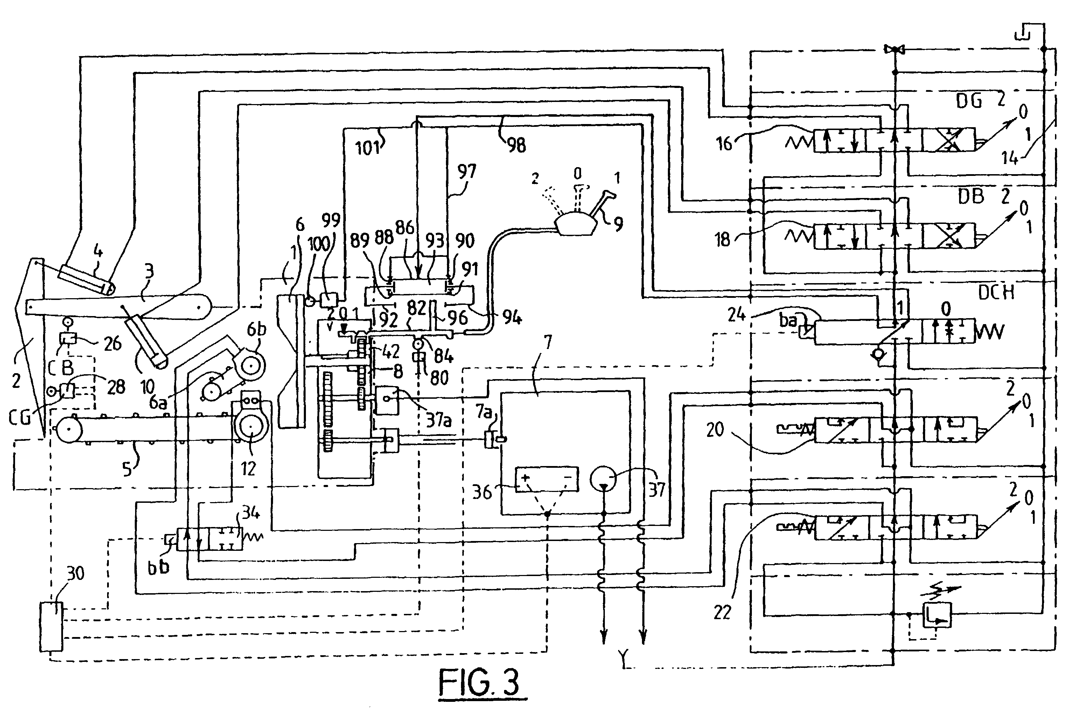

Le dispositif de sécurité représenté à la figure 3 est semblable à celui décrit en référence à la figure 1.

Les éléments communs à ces deux variantes du dispositif de sécurité sont désignés par les mêmes numéros de référence.

Le dispositif de la figure 3 diffère de celui de la figure 1 par les points suivants. Il comporte un détecteur ou un capteur 80 de position d'un organe 82 d'actionnement du pignon 42 de changement de rapport de la boîte de vitesses 8.

A cet effet, l'organe d'actionnement 82 comporte une came 84 coopérant avec le capteur 80. Ce capteur est comme les autres capteurs 26 et 28 connecté à une sortie du relais 30.

Le dispositif de la figure 3 diffère en outre de celui décrit en référence à la figure 1 en ce qu'il comprend un vérin 86 de débrayage à l'arrêt de la boîte de vitesses 8, ce vérin comprenant trois chambres délimitées respectivement entre la paroi du vérin et les deux pistons 88 et 90 de celui-ci et par cette même paroi et l'espace entre les deux pistons précités, lesdites chambres portant respectivement les numéros de référence 89, 91 et 93.

Chacun des pistons 88 et 90 porte une tige coudée 92 et 94 de déplacement en translation d'un bras 96 solidaire de l'organe 82 d'actionnement du pignon 42 de changement de rapport. Les chambres d'extrémité 89 et 91 sont reliées au distributeur 24, qui ne comporte qu'un seul bobinage ba, par un premier conduit 97. La chambre centrale 93 d'un vérin 86 ménagée entre les pistons 88 et 90 est reliée au distributeur 24 par un second conduit 98.

Le dispositif comporte en outre un vérin hydraulique 99 à simple effet, dont la tige de piston comporte un galet 100 de roulement capable de rouler sur le disque de la turbine 6 pour assurer son freinage lors de l'actionnement du vérin 39.

Celui-ci est relié par un conduit 101 au conduit 97 de liaison du distributeur 24 avec les deux chambres d'extrémité 89 et 91 du vérin 86.

Le relais 30 est du type à temporisation dont la durée de temporisation est réglée en fonction de l'inertie de rotation de la turbine 6.

Ce dispositif fonctionne de la manière suivante.

On suppose tout d'abord que le moteur du tracteur est arrêté, la griffe 2 et les bras 3 étant en position fermée, de sorte qu'il n'y a pas de risque de pénétration dans la caisse de la machine.

On met le moteur du tracteur en marche.

Le courant électrique passe dans les conditions suivantes :

- batterie 36 branchée,
- contact électrique 26 de bras fermé,
- contact électrique 28 de griffe fermé,
- contact électrique 80 de détectin de position du sélecteur 8 fermé, soit manuellement en déplaçant le contact 80, soit automatiquement à l'aide de la came 84 solidaire de l'organe d'actionnement 82 actionné par le levier de changement de vitesses, lorsque l'on déplace le levier 9 pour engager une vitesse de 0 à 1 ou de 0 à 2.

Les bobines ba du distributeur 24 et bb de l'électrovanne 34 étant excitées, le distributeur est en position travail 1.

L'électrovanne 34 est également en position de travail 1.

La position de travail 1 du distributeur 24 permet :

a) de relier les trois chambres 89;91,93 du vérin 86 au retour à la bâche,
b) d'interdire l'utilisation des distributeurs 16,18, car ils sont reliés également à la bâche R et ne peuvent transmettre aucune pression aux récepteurs correspondants tels que les bras 3 et la griffe 2.

Il est donc impossible d'ouvrir la griffe 2 et les bras 3, mais il est possible de faire tourner la turbine.

La position de travail 1 de l'électrovanne 34 permet d'utiliser les distributeurs 20 et 22.

Il est donc possible de faire tourner les moteurs hydrauliques 6b et 12.

Lorsque la turbine tourne, il n'y a pas de problème de sécurité, pour les raisons indiquées plus haut.

Lorsque l'opérateur décide d'arrêter la turbine, il y a production de la séquence suivante :

1) débrayage de la prise de force 7a du tracteur, ou même arrêt complet du moteur thermique du tracteur,
2) la turbine 6 n'est plus entraînée, mais continue encore de tourner pendant un certain temps (2 à 3 mn), à cause de son inertie importante, avant de s'immobiliser complètement.
3) pendant cette décélération, il est bien sûr interdit d'utiliser les bras 3 et la griffe 2. Il faut donc conserver la position travail 1 du distributeur 24.
4) afin d'éviter de couper le courant dans la bobine ba et la bobine bb, en manipulant le contact 80, soit directement, soit indirectement, à l'aide du levier 9, la temporisation électrique du relais 30 va pendant 3 minutes par exemple continuer à maintenir le courant électrique pour que le distributeur 24 conserve sa position travail 1 et l'électrovanne 34, sa position travail 1, jusqu'à au moins l'arrêt complet de la turbine 6.

Cette temporisation peut également être assurée par un détecteur de rotation de la turbine analogue au détecteur 32 du dispositif de la figure 1, qui commande alors le relais 30.
5) lorsque la temporisation est terminée, le circuit électrique est coupé, la turbine 6 est immobilisée. Le distributeur 24 passe en position repos O, ainsi que l'électrovanne 34, si le contact 80 est ouvert.
6) La turbine étant arrêtée, la griffe 2 étant fermée, les bras 3 étant fermés, il est possible d'utiliser à nouveau :

soit la turbine 6 et les moteurs hydrauliques 6b et 12 sans les bras 3 et sans la griffe 2;
soit les bras 3 et la griffe 2, sans la turbine 6 et sans les moteurs hydrauliques 6b et 12.

Afin de réduire le temps de décélération de la turbine 6, il y a actionnement du frein 99,100.

Lorsque le distributeur 24 est en position O à rappel par ressort, la pression hydraulique s'établit dans les deux vérins 86 et 99.

Le galet 100 du vérin 99 est mis en contact avec le disque de la turbine 6 sous l'effet de la pression hydraulique, roule sur ce disque et freine progressivement la turbine jusqu'à l'arrêt complet.

Lorsque le moteur du tracteur est arrêté, la pompe hydraulique 37 est à l'arrêt et ne débite pas. La griffe 2 est levée et les bras 3 sont levés.

Aucun courant électrique ne circule que la batterie soit branchée ou non.

Les bobines ba et bb du distributeur 24 et de l'électrovanne 34 ne sont pas excitées.

Le distributeur 24 est donc en position repos O à rappel par ressort.

Le clapet anti-retour du distributeur 24 retient l'huile emmagasinée dans les deux chambres côté tige du vérin de débrayage 86, de la boîte de vitesses 8.

Le levier de changement de vitesse 9 est maintenu bloqué au point mort.

Il est donc impossible d'embrayer la turbine.

L'électrovanne 34 des moteurs hydrauliques est aussi en position repos 0, à rappel par ressort.

Il est donc impossible de faire tourner les moteurs hydrauliques 6b et 12 d'actionnement du convoyeur oblique 6a et du fond mobile 5.

Lorsque le moteur du tracteur est en marche, la pompe hydraulique 37 tourne et débite de l'huile, la griffe 2 est levée, les bras 3 sont levés et il n'y a pas de courant électrique car les contacts 26 et 28 sont ouverts.

Les bobines ba et bb ne sont pas excitées.

Le distributeur 24 est donc maintenu en position repos 0, à rappel par ressort ainsi que l'électrovanne 34.

Il est donc toujours impossible d'embrayer la turbine 6 et de faire tourner les moteurs hydrauliques 6b et 12.

Un étrangleur (non représenté) dans la dérivation en position repos O du distributeur 24, a pour fonction de créer une légère perte de charge dans le débit, pour que l'huile ne soit pas dirigée directement en aval du distributeur 24, par exemple sur le retour à la bâche, mais prioritairement, vers les deux chambres 89,91 côté tige du vérin hydraulique 86 garantissant ainsi le maintien du blocage au point mort de la boîte de vitesses.

Par ailleurs, bien que selon le présent exemple, le dispositif de sécurité soit du type hydraulique à commande électrique, il est également possible de concevoir un dispositif de sécurité de type électrique à commande électrique ou hydraulique ou encore un dispositif hydraulique à commande hydraulique.

Par ailleurs, dans tous les cas, les moyens hydrauliques peuvent être remplacés par des moyens pneumatiques.

## Revendications

1. Machine de distribution et/ou de mélange d'aliments fourragers comprenant une caisse (1) sur laquelle sont montés des moyens (2) de chargement et/ou de fermeture de la caisse, des moyens (4,10,16,18) d'actionnement des moyens (2) de chargement et/ou de fermeture, des moyens (6,6a) de démêlage des produits contenus dans la caisse (1), des moyens. (7a,8,5,12,6b) d'actionnement des moyens de démêlage **caractérisée en ce que** la machine comporte un dispositif de sécurité comportant des moyens de détection (32;80) capables de détecter l'état de fonctionnement ou d'arrêt des moyens de démêlage, des moyens (26,28) de détection capables de détecter la position et/ou l'état des moyens (2) de chargement et/ou de fermeture et des moyens de commande (24,30,34,38; 24,30,34,86) destinés à interdire l'accès à l'intérieur de la caisse par action sur les moyens (2) de chargement et/ou de fermeture lors du fonctionnement des moyens de démêlage (6,6a) et à autoriser l'accès à l'intérieur de la caisse par action sur les moyens (2) de chargement et/ou de fermeture lors de l'arrêt des moyens de démêlage.

2. Machine suivant la revendication 1, **caractérisée en ce que** les moyens de démêlage comprenant une turbine (5) entraînée en rotation à partir de la prise de force (7a) d'un tracteur (7) associé à la machine, les moyens de détection de l'état de fonctionnement ou d'arrêt des moyens de démêlage comportent un détecteur (32) de rotation de la turbine, et **en ce que** les moyens (2) de chargement et/ou de fermeture comprenant une porte articulée sur la caisse au moyen de bras (3), la machine comporte des moyens de détection de la position d'ouverture ou de fermeture de la porte comprenant au moins un capteur de bras (26).

3. Machine suivant la revendication 1, **caractérisée en ce que** les moyens de démêlage comprenant une turbine (6) entraînée en rotation à partir de la prise de force (7a) du tracteur (7) associé à la machine, par l'intermédiaire d'une boîte de vitesses (8) à levier (9), les moyens de détection de l'état de fonctionnement ou d'arrêt des moyens de démêlage comportent un capteur (80) de la position du levier (9) de la boite de vitesses correspondant à l'état de rotation ou d'arrêt de la turbine (6) et **en ce que** les moyens (2) de chargement et/ou de fermeture comprenant une porte articulée sur la caisse au moyen de bras (3), la machine comporte des moyens de détection de la position d'ouverture où de fermeture de la porte comprenant au moins un capteur de bras (26).

4. Machine suivant l'une des revendications 2 et 3, **caractérisée en ce que** les moyens de détection de la position d'ouverture et de fermeture de la porte (2) comportent en outre au moins un capteur de porte (28).

5. Machine suivant l'une des revendications 2 à 4, **caractérisée en ce que** les capteurs (26,28) de bras (3) et de porte (2) sont des contacteurs.

6. Machine suivant l'une des revendications 1 et 2, **caractérisée en ce que** les moyens (32;80) de détection de l'état de fonctionnement ou d'arrêt des moyens de démêlage et les moyens (26,28) de détection d'ouverture ou de fermeture de la porte (2) sont connectés à au moins un relais électromagnétique (30) qui fait partie des moyens de commande destinés à interdire l'ouverture de la porte (2) lors du fonctionnement des moyens de démêlage (6,6a).

7. Machine suivant la revendication 6, **caractérisée en ce que** ledit relais électromagnétique (30) est un relais temporisé dont la valeur de temporisation est fonction du temps de rotation par inertie de la turbine (6) après interruption de son entraînement à partir de la prise de force du tracteur.

8. Machine suivant l'une des revendications 6 et 7, **caractérisée en ce que** les moyens d'actionnement de la porte comprenant au moins un vérin (10) de déplacement des bras (3) d'articulation de la porte (2) sur la caisse (1) de la machine et au moins un vérin (4) de déplacement de la porte (2) par rapport aux bras (3) et des distributeurs hydrauliques (18,16) de commande desdits vérins (10,4), et les moyens d'actionnement des moyens de démêlage comportant au moins la prise de force (7a) d'un tracteur (7) associé à la machine et assurant l'entraînement en rotation de la turbine (6) par l'intermédiaire d'une boîte de vitesses (8) actionnée par un levier (9) de changement de vitesses, les moyens de commande destinés à interdire l'ouverture de la porte (2) lors du fonctionnement des moyens de démêlage comprennent un distributeur de chargement (24) à commande électrique connecté électriquement au relais électromagnétique (30) et branché dans le circuit hydraulique d'alimentation des distributeurs hydrauliques (16,18) de commande des vérins (4,10) d'actionnement des bras (3) et de la porte (2) ainsi que dans le circuit hydraulique d'alimentation d'un vérin (38;86) de débrayage à l'arrêt de la boîte de vitesses (8) interposé entre le levier de changement de vitesses (9) et ladite boites de vitesses (8).

9. Machine suivant la revendication 8, **caractérisée en ce que** les moyens de demêlage comprenant en outre un démêleur tournant (6a) entraîné par un moteur hydraulique (6b) sous la commande d'un distributeur hydraulique (22), la machine comporte en outre une vanne (34) à commande électromagnétique commandée par le relais électromagnétique (30) et branchée dans le circuit hydraulique d'alimentation du moteur hydraulique (6b) d'entraînement du démêleur tournant (6a) afin d'interdire l'alimentation dudit moteur hydraulique en présence d'une commande d'ouverture de la porte (2) délivrée par le distributeur de chargement (24) aux distributeurs hydrauliques (16,18) de commande des vérins (4,10) d'actionnement de la porte (2) et du bras (3) d'articulation de celle-ci sur la caisse (1) de la machine.

10. Machine suivant la revendication 9, comportant en outre un fond mobile (5) entraîné par un moteur hydraulique (12) sous la commande d'un distributeur hydraulique (20), **caractérisée en ce que** la vanne à commande électromagnétique (34) est également branchée dans le circuit hydraulique d'alimentation du moteur hydraulique (12) d'entraînement du fond mobile (5) afin d'interdire l'alimentation dudit moteur hydraulique en présence d'une commande d'ouverture de la porte (2) délivrée par le distributeur de chargement (24) aux distributeurs hydrauliques de commande des vérins (4,10) d'actionnement de la porte (2) et des bras (3) d'articulation de celle-ci sur la caisse (1) de la machine.

11. Machine suivant l'une des revendications 8 à 10, **caractérisée en ce que** le distributeur de chargement (24) comporte au moins un bobinage (ba) commandé par le relais (30) à commande électromagnétique pour assurer la commutation entre l'alimentation des distributeurs hydrauliques (16,18) de commande des vérins (4,10) d'actionnement de la porte (2) et des bras (3) et celle du vérin hydraulique (38;86) de blocage au point mort de la boîte de vitesses (8).

12. Machine suivant la revendication 11, **caractérisée**

**en ce que** le distributeur de chargement (24) comporte en outre un second bobinage (bb) commandé par le relais à commande électromagnétique (30) pour assurer l'interdiction de débrayage de la turbine (6) en cours de rotation de celle-ci.

13. Machine suivant l'une des revendications 8 à 12, **caractérisée en ce que** le vérin (38) de débrayage à l'arrêt de la boîte de vitesses (8) comporte un corps (44) pourvu de deux chambres d'extrémités (66,68) alimentées en fluide hydraulique par l'intermédiaire du distributeur de chargement (24) et dans chacune desquelles est monté déplaçable un piston (58,60), lesdits pistons définissant la course d'un piston baladeur (74) monté déplaçable dans une chambre centrale (78) et relié à une pièce (40) de déplacement d'un pignon (42) de changement de rapport de la boîte de vitesses, reliée mécaniquement au levier de changement de vitesses (9), les pistons (58,60) montés dans les chambres d'extrémités assurant sous la commande du distributeur de chargement (24), en fonction de la position des bras (3) et de la porte (2) ainsi que de l'état de la turbine (6), le blocage du piston baladeur (74) au moins dans une position correspondant au point mort de la boite de vitesses lorsque la turbine (6) est immobile.

14. Machine suivant l'une des revendications 12 et 13 prisés ensembles, **caractérisée en ce que** les pistons (58,60) montés dans les chambres d'extrémités assurent également le blocage du piston baladeur (74) dans une position correspondant à l'engagement d'un rapport de la boîte de vitesses (8) tant que la turbine (6) est en rotation.

15. Machine suivant l'une des revendications 8 à 12, **caractérisée en ce que** le vérin (86) de débrayage à l'arrêt de la boîte de vitesses (8) comporte trois chambres (89,91,93) délimitées respectivement entre la paroi du vérin et deux pistons (88,90) de celui-ci et entre cette même paroi et l'espace entre les deux pistons (88,90) précités et **en ce que** chaque piston porte une tige coudée (92,94) de déplacement en translation d'un bras (96) solidaire d'un organe (82) d'actionnement d'un pignon (42) de changement de rapport de la boîte de vitesses, relié mécaniquement au levier de changement de vitesses (9), les trois chambres (89,91,93) dudit vérin étant reliées au distributeur de chargement (24) et les pistons (88,90) dudit vérin assurant sous l'action de la pression de fluide de la chambre (93) délimitée par l'espace entre les deux pistons et par l'intermédiaire des tiges coudées (92,94), en fonction de la position des bras (3) et de la porte (2) ainsi que de l'état de la turbine (6), le blocage de l'organe d'actionnement (82) au moins dans une position correspondant au point mort de la boîte de vitesses (8).

**16.** Machine suivant la revendication 15, **caractérisée en ce que** le capteur (80) de la position du levier (9) de la boîte de vitesses est associé à une came (84) portée par l'organe (82) d'actionnement du pignon (42) de changement de rapport de la boîte de vitesses.

**17.** Machine suivant l'une des revendications 2 à 16, **caractérisée en ce qu'**elle comporte en outre un frein (99,100) destiné à assurer le freinage de la turbine (6) dès l'interruption de son entraînement en rotation.

**18.** Machine suivant la revendication 17, **caractérisée en ce que** ledit frein comprend un vérin (99) dont la tige est pourvue d'un galet (100) de roulement sur le disque de la turbine (6), ledit vérin (99) étant relié au distributeur de chargement (24) et étant commandé simultanément avec le vérin (86) de débrayage à l'arrêt de la boîte de vitesses (8) pour provoquer le freinage de la turbine (6) dès le passage au point mort de la boîte de vitesses (8).

**Claims**

**1.** A fodder dispensing and/or mixing machine comprising a chamber (1) to which means (2) of loading and/or closing the chamber are assembled, means (4, 10, 16, 18) for operating the loading and/or closing facilities (2), means (6, 6a) for loosening up the products contained in the chamber (1), means (7a, 8, 5, 12, 6b) for operating the loosening up facilities, **characterised by** the fact that the machine has a safety device with sensing means (32, 80) capable of detecting the operating or inoperative state of the loosening up facilities, sensing means (26, 28) capable of detecting the position and/or the condition of the loading and/or closing means (2) and operating means (24, 30, 34, 38; 24, 30, 34, 86) designed to prevent access to the inside of the chamber by operating the loading and/or closing facilities (2) when the loosening up facilities (6, 6a) are operating, and to allow access to the inside of the chamber by operating the loading and/or closing facilities (2) when the means of loosening up stop.

**2.** A machine according to Claim 1, **characterised by** the fact that the loosening up facilities comprise a turbine (6) rotated from the power take-off (7a) of a tractor (7) associated with the machine, means of detecting the operating or inoperative state of the loosening up facilities with a sensor (32) which detects the rotation of the turbine, and by the fact that the loading and/or closing means (2) include a gate hinged to the chamber by means of an arm (3); the machine has means of sensing the opening or closing position of the gate, including at least one arm sensor (26).

**3.** A machine according to Claim 1, **characterised by** the fact that the loosening up facilities comprise a turbine (6) rotated from the power take-off (7a) of the tractor (7) associated with the machine, by means of a gearbox (8) operated by a lever (9), means of sensing the operating or inoperative state of the loosening up facilities comprising a sensor (80) for the position of the gear lever (9) corresponding to the rotating or inoperative state of the turbine (6), and by the fact that the loading and/or closing facilities (2) including a gate hinged to the chamber by means of arms (3); the machine has means of sensing the opening or closing position of the gate which has at least one arm sensor (26).

**4.** A machine according to one of the Claims 2 and 3, **characterised by** the fact that the means of sensing the opening and closing position of the gate (2) have in addition at least one gate sensor (28).

**5.** A machine according to one of the Claims 2 to 4, **characterised by** the fact that the arm (3) and gate (2) sensors (26, 28) are contactors.

**6.** A machine according to one of the Claims 1 and 2, **characterised by** the fact that the means (32, 80) of detecting the operating or inoperative state of the loosening up facilities and the means (26, 28) for sensing the opening or closing of the gate (2) are connected to at least one electromagnetic relay (30) which forms part of the controls designed to prevent the gate (2) opening when the loosening up facilities (6, 6a) are operating.

**7.** A machine according to Claim 6, **characterised by** the fact that the said electromagnetic relay (30) is a timed relay, the timing of which depends on the time of rotation by inertia of the turbine (6) after its drive from the tractor power take-off is interrupted.

**8.** A machine according to one of the Claims 6 and 7, **characterised by** the fact that the means of operating the gate comprise at least one cylinder (10) for moving the arms (3) which hinge the gate (2) to the chamber (1) of the machine and at least one cylinder (4) for moving the gate (2) in relation to the arms (3) and the hydraulic distributors (18, 16) controlling the said cylinders (10, 4), and means of operating the loosening up facilities consisting at least of the power take-off (7a) of a tractor (7) associated with the machine and driving round the turbine (6) by means of a gearbox (8) operated by a gear change lever (9); the means of control designed to prevent opening of the gate (2) when the loosening up facilities are operating include an electrically operated loading distributor (24) electrically connected to the electromagnetic relay (30) and connected into the hydraulic circuit for feeding the hydraulic distributors (16, 18) controlling the cylinders (4, 10) which operate the arms (3) and the gate (2) as well as into the hydraulic circuit of a cylinder (38, 86) for disengaging when the gearbox (8) inserted between the gear lever (9) and the said gearbox (8) is stopped.

9. A machine according to Claim 8, **characterised by** the fact that the loosening up facilities also include a rotating loosening up device (6a) driven by a hydraulic motor (6b) under the control of a hydraulic distributor (22); the machine also has an electromagnetically operated valve (34) controlled by the electromagnetic relay (30) and connected into the hydraulic circuit for supplying the hydraulic motor (6b) which drives the rotating loosening up device (6a) in order to prevent the said hydraulic motor from being supplied if a control is in operation to open the gate (2), issued by the loading distributor (24) to the hydraulic distributors (16, 18) which control the cylinders (4, 10) operating the gate (2) and the arm (3) which hinges the gate to the chamber (1) of the machine.

10. A machine according to Claim 9, comprising in addition a moving bottom (5) driven by a hydraulic motor (12) under the control of a hydraulic distributor (20), **characterised by** the fact that the electromagnetically operated valve (34) is also connected into the hydraulic circuit for supplying the hydraulic motor (12) driving the moving bottom (5) in order to prevent the said hydraulic motor being supplied if there is a command for opening the gate (2) issued by the loading distributor (24) to the hydraulic distributors controlling the cylinders (4, 10) which operate the gate (2) and the arms (3) hinging it to the chamber (1) of the machine.

11. A machine according to one of the Claims 8 to 10, **characterised by** the fact that the loading distributor (24) has an least one winding (ba) controlled by the electromagnetically operated relay (30) to ensure switching over between the supply for the hydraulic distributors (16, 18) controlling the cylinders (4, 10) operating the gate (2) and the arms (3) and that for the hydraulic cylinder (38, 86) for locking at the dead centre of the gearbox (8).

12. A machine according to Claim 11, **characterised by** the fact that the loading distributor (24) has in addition a second winding (bb) controlled by the electromagnetically operated relay (30) to ensure prohibition on disengaging the turbine (6) while it is rotating.

13. A machine according to one of the Claims 8 to 12, **characterised by** the fact that the cylinder (38) for disengaging when the gearbox (8) stops has a body (44) which has two end chambers (66, 68) supplied with hydraulic fluid by means of the loading distributor (24) and in each of these chambers a movable piston (58, 60) is fitted, the said pistons defining the stroke of a sliding piston (74) fitted to move in a centre chamber (78) and connected to a moving part (40) of a gear (42) for changing the ratio of the gearbox, mechanically connected to the gear lever (9), the pistons (58, 60) fitted in the end chambers ensuring, under the control of the loading distributor (24), in relation to the position of the arms (3) and of the gate (2), as well as the state of the turbine (6), locking of the sliding piston (74) at least in a position corresponding to the dead centre of the gearbox when the turbine (6) is immobile.

14. A machine according to one of the Claims 12 and 13 taken together, **characterised by** the fact that the pistons (58, 60) fitted in the end chambers also ensure locking of the sliding piston (74) in a position corresponding to engagement of a gearbox (8) ratio as long as the turbine (6) is rotating.

15. A machine according to one of the Claims 8 to 12, **characterised by** the fact that the cylinder (86) for disengaging when the gearbox (8) is stopped has three chambers (89, 91, 93) delineated respectively between the wall of the cylinder and two pistons (88, 90) of it, and between this same wall and the space between the aforesaid two pistons (88, 90), and by the fact that each piston has a bent rod (92, 94) for linear movement of an arm (96) integral with a unit (82) which operates a gearwheel (42) for changing gear in the gearbox, mechanically connected to the gear lever (9), the three chambers (89, 91, 93) of the said cylinder being connected to the loading distributor (24) and the pistons (88, 90) of the said cylinder ensuring, under the action of the pressure of the fluid from the chamber (93) delineated by the space between the two pistons and by means of the bent rods (92, 94), in relation to the position of the arms (3) and of the gate (2), as well as the state of the turbine (6), locking of the operating unit (82) at least in a position corresponding to the dead centre of the gearbox (8).

16. A machine according to Claim 15, **characterised by** the fact that the sensor (80) for the position of the gear lever (9) is associated with a cam (84) carried by the unit (82) which operates the pinion (42) for changing the ratio of the gearbox.

17. A machine according to one of the Claims 2 to 16, **characterised by** the fact that it has in addition a brake (99, 100) designed to ensure braking of the turbine (6) as soon as it ceases to be driven round.

**18.** A machine according to Claim 17, **characterised by** the fact that the said brake includes a cylinder (99), the rod of which is provided with a follower (100) for rolling on the disc of the turbine (6), the said cylinder (99) being connected to the loading distributor (24) and being operated simultaneously with the disengaging cylinder (86) when the gearbox (8) is stopped, to cause braking of the turbine (6) immediately on passing to the dead centre of the gearbox (8).

**Patentansprüche**

**1.** Maschine zum Verteilen und/oder Mischen von Viehfutter, aufweisend einen Behälter (1), auf welchem Mittel (2) zum Baladen und/oder Verschließen des Behälters, Mittel (4, 10, 16, 18) zum Betätigen der Mittel zum Beladen und/oder Verschließen, Mittel (6, 6a) zum Auflockern der in dem Behälter (1) enthaltenen Produkte und Mittel (7a, 8, 5, 12, 6b) zum Betätigen der Auflockerungsmittel angebracht sind, **dadurch gekennzeichnet, dass** die Maschine eine Sicherheitsvorrichtung aufweist, welche Ermittlungsmittel (32; 80) umfasst, die dazu ausgelegt-sind, den aktiven Zustand oder den inaktiven Zustand der Auflockerungsmittel zu ermitteln, Ermittlungsmittel (26, 28), die dazu ausgelegt sind, die Position und/oder den Zustand der Mittel (2) zum Beladen und/oder zum Verschließen zu ermitteln, und Steuerungsmittel (24, 30, 34, 38, 24, 30, 34, 86), die dazu bestimmt sind, den Zugang zum Innern des Behälters durch Einwirkung auf die Mittel (2) zum Beladen und/oder Verschließen bei aktiven Auflockerungsmitteln (6, 6a) zu unterblnden, und den Zugang zum Innern des Behälters durch Einwirkung auf die Mittel (2) zum Beladen und/oder Verschlfeßen bei inaktiven Mitteln zum Auflockern zuzulassen.

**2.** Maschine nach Anspruch 1, **dadurch gekennzeichnet, dass** die Mittel zum Auflockern eine Turbine (6) aufweisen, die drehangetrieben ist, ausgehend von der Zapfwelle (7a) eines Traktors (7), welcher der Maschine zugeordnet ist, Mittel zum Ermitteln des aktiven und des inaktiven Zustands der Mittel zun Auflockern, umfassend einen Detektor (32) für die Drehung der Turbine, und dass die Mittel (2) dem Beladen und/oder Verschließen eine Klappe aufweisen, die an dem Behälter mittels eines Arms (3) angelegt sind, und die Maschine Mittel zum Ermitteln der Öffnungs- oder Schlteßstellung der Klappe aufweist, die zumindest einen Armsenser (26) umfassen.

**3.** Maschine nach Anspruch 1, **dadurch gekennzeichnet, dass** die Mittel zum Auflockern eine turbine (6) aufweisen, die drehangetrieben ist, ausgebend von der Zapfwelle. (7a) eines Traktors (7), der der Maschine zugeordnet ist, und zwar uber ein Schaltgetriebe (8) mit einem Hebel (9), wobei die Mittel zum Ermitteln des aktiven oder inaktiven Zustands der Mittel zum Auflockern einen Fühler (80) für die Position des Hebels (9) des Schaltgetriebes entsprechend dem Drehzustand oder Anhaltezustand der Turbine (6) aufweisen, und dass die Mittel (2) zum Beladen und/oder Verschließen eine Klappe aufweisen, die an dem Behälter mittels eines Arms (3) angelegt sind, und die Maschine Mittel zum Ermiteln der Öffnungs- oder Schließstellung der Klappe aufweist, die zumindest einen Armsensor (26) umfassen.

**4.** Maschine nach Anspruch 2 oder 3, **dadurch gekennzeichnet, dass** die Mittel zum Ermitteln der Öffnunge und Schließposition der Klappe (2) außerdem zumindest einen Klappenfühler (28) umfassen.

**5.** Maschine nach einem der Ansprüche 2 bis 4, **dadurch gekennzeichnet, dass** die Fühler (26, 28) für den Arm (3) und die Klappe (2) Schalter bzw. Schütze sind.

**6.** Maschine nach Anspruch 1 oder 2, **dadurch gekennzeichnet, dass** die Mittel (32; 80) zum Ermitteln des aktiven oder inaktiven Zustands der Mittel zum Auflockern und dre Mittel (26, 28) zum Ermitteln der Öffnungs- oder Schließstellung der Klappe (2) zumindest mit einem elektromagnetischen Relais (30) verbunden sind, welches Teil der Steuerungsmittel bildet, die dazu bestimmt sind, das Öffnen der Klappe (2) bei aktiven Mitteln (6, 6a) zum Auflockern zu unterbinden.

**7.** Maschine nach Anspruch 6, **dadurch gekennzeichnet, dass** das elektromagnetische Relais (30) ein zeitsteuerbares Relais ist, dessen Zeltsteuerungswert eine Funktion der Auslauf zeit der Turbine (6) nach der Unterbrechung ihres Antriebs ausgehend von der Zapfwelle des Traktors ist.

**8.** Maschine nach Anspruch 6 oder 7, **dadurch gekennzeichnet, dass** die Mittel zur Betätigung der Klappe zumindest einen Zylinderstelltrieb (10) zur Verschiebung des Arms (3) der Anlenkung der Klappe (2) an den Behailer (1) der Maschine und zumindest einen Zylinderstelltrieb (4) zur Verschiebung der Klappe (2) relativ zum Arm (3) und Hydraulikverteiler (18, 16) zur Steuerung der Zylinderstelltriebe (10, 4) aufweist, und dass die Mittel zur Betätigung der Mittel zum Auflockern zumindest die Zapfwelle (7a) eines Traktors (7) umfassen, der der Maschine zugeordnet ist und den Drehantrieb der Turbine (6) über ein Schaltgetriebe (8) sicherstellen, das durch einen Gangschalthebel (9) betätigt ist, das die Steuerungsmittel zum Unterbinden des Öffnens der Klappe (2) bei aktiven Mitteln zum Entmischen einen elektrisch gesteuerten Beladungsverteiler (24) umtassen, der elektrisch mit dem elektromagnetischen Relais (30) verbunden und in den Hydraulikkreis zur Versorgung der Hydraulikverteiler (16, 18) zur Steuerung der Zylinderstelltriebe (4, 10) zur Betätigung des Arms (3) und der Klappe (2) sowie in den Hydraulikkreis zur Versorgung eines Zylinderstelltriebs (38, 86) zum Auskuppeln beim Anhalten des Getriebes (8) eingeschleift ist, der zwischen den Gangschalthebeln (9) und dem Getriebe (8) angeordnet ist.

9. Maschine nach Anspruch 8, **dadurch gekennzeichnet, dass** die Mittel zum Entmischen äußerdem einen Drehentmischer (6a) umfassen, der durch einen Hydraulikmotor (6b) unter der Steuerung eines Hydraulikverteilers (22) angetrieben ist, wobei die Maschine außerdem ein elektromagnetisches Steuerventil (34) umfasst, das durch das elektromagnetische Relais (30) gesteuert ist, und das in den Hydraulikkreis zur Versorgung des Hydraulikmotors (6b) zum Antrieb des Drehentmischers (6a) eingeschleift 1st, um die Versorgung des Hydraulikmotors bei Vorliegen eines Öffnungsbefehls für die Klappe (2) zu unterbinden, der durch den Beladungsverteiler (24) zu den Hydraulikverteilern (16, 18) zur Steuerung der Zylinderstelltriebe (4, 10) zur Betätigung der Klappe (2) und des Arms (3) zur Anlenkung desselben am Behälter (1) der Maschine bereitgestellt ist.

10. Maschine nach Anspruch 9, außerdem aufweisend einen beweglichen Boden (5), der durch einen Hydraulikmotor (12) unter der Steuerung eines Hydraulikverteilers (20) angetrieben ist, **dadurch gekennzeichnet, dass** das elektromagnetische Steuerventil (34) außerdem in den Hydraulikkreis zur versorgung des Hydraulikmotors (12) zum. Antrieb des Bodens (5) eingeschleift ist, um die Versorgung des Hydraulikmotors bei Vorliegen eines Befehls zur Öffnung der Klappe (2) zu unterbinden, der durch den Beladungsverteiler (24) zu den Hydraulikverteilern (46, 48) zur Steuerung der Zylinderstelitriebe (4, 10) zur Betätigung der Klappe (2) und von Armen (3) zur Anlenkung desselben am Behälter (1) der Maschine bereitgestellt ist.

11. Maschine nach einem der Ansprüche 8 bis 10, **dadurch gekennzeichnet, dass** der Beladungsverteiler (24) zumindest eine Spule (ba) umfasst, die durch das elektromagnetisch gesteuerte Relais (30) gesteuert ist, um die Kommutation zwischen der Versorgung der Hydraulikverteiler (16, 18) zum Steuern der Zylinderstelltriebe (4, 10) zur Betätigung der Klappe (2) und der Arme (3) und diejenige des Hydraulikstellzylinders (38; 86) zur Blockierung des Schaltgetriebes (8) im Todpunkt herzustellen.

12. Maschine nach Anspruch 11, **dadurch gekennzeichnet, dass** der Beladungsverteiler (24) außerdem eine zweite Spule (bb) umfasst, die durch das elektromagnetisch gesteuerte Relais (30) gesteuert ist, um das Unterbinden der Abstellung der Turbine (6) im Lauf ihrer Drehung sicherzustellen.

13. Maschine nach einem der Ansprüche 8 bis 12, **dadurch gekennzeichnet, dass** der Zylinderstelltriebe (38) zum Auskuppeln beim Anhalten des Schaltgetriebes (8) einen Körper (44) umfasst, der mit zwei endseitigen Kammern (66, 68) versehen ist, die mit einem Hydraulikfluid über den Beladungsventeiler (24) versorgt werden, und in denen jeweils verstellbare Kolben (58, 60) vorgesehen ist, wobei die Kolben den Bewegungspfad eines Schiebekolbens (74) festlegen, der in einer zentralen Kammer (78) verschiebbar angebracht und mit einem Element (40) zum Verschieben einen Ritzels (42) zum Ändern eines Gangs des Schaltgetriebes verbunden ist, das mechanisch mit dem Gangschalthebel (9) verbunden ist, wobei die Kolben (58, 60), die in den endseitigen Kammern vorgesehen sind, unter der Steuerung des Beladungsverteilers (24) als Funktion der Position des Arms (3) und der Klappe (2) sowie des Zustands der Turbine (6) die Blockierung des Schlebekolbens (74) zumindest in einer Position sicherstellen, die dem Todpunkt des Schaltgetriebes bei unbeweglicher Turbine (6) entspricht.

14. Maschine nach Anspruch 12 und 13 in Verbindung miteinander, **dadurch gekennzeichnet, dass** die Kolben (58, 60), die in den endseitigen Kammern vorgesehen sind, außerdem die Blockade des Schiebekolbens (74) in einer Position entsprechend dem Einrücken eines Gangs des Schaltgetriebes (8) sicherstellen, wenn die Turbine (6) sich in Drehung befindet.

15. Maschine nach einem der Ansprüche 8 bis 12, **dadurch gekennzeichnet, dass** der Zylinderstelltriebs (86) zum Auskuppeln bei Anhalten des Schaltgetriebes (8) drei kammern (89, 91, 93) umfasst, die jeweils zwischen der Wand des Zylinders und den beiden Kolben (88, 90) desselben und zwischen eben dieser Wand und dem Raum zwischen den genannten Kolben (88, 90) begrenzt sind, und dass jeder Kolben eine gekröpfte Stange (92, 94) zur Translationsverschiebung eines Arms (96) trägt, die fest mit einem Organ (82) zur Betätigung eines Ritzels (42) zur Gangänderung des Schaltgetriebes verbunden ist, das mechanisch mit dem Gangschalthebel (9) verbunden ist, wobei die drei Kammern (89, 91, 93) des Zylinderstelltriebs mit dem Beladungsverteiler (24) verbunden sind, und wobei die Kolben (88, 90) des Zylinderstelltriebs unter der Einwirkung des Druckfluids der Kammer (93), die durch den Raum zwischen den beiden Kolben begrenzt ist, und über die gekröpften Stengen (92, 94) als Funktion der Position des Arms (3) und der Klappe (2) sowie des Zustands der Turbine (6) die Blockade des Betätigungsorgans (82) zumindest in einer Position sicherstellt, die dem Todpunkt des Schaltgetriebes (8) entspricht.

16. Maschine nach Anspruch 15, **dadurch gekennzeichnet, dass** der Fühler (80) für die Position des nebeis (9) einer Nocke (84) zugeordnet ist, die durch das Betätigungsorgan (82) für das Ritzel (42) zur Änderung des Gangs des Schaltgetriebes getragen ist.

17. Maschine nach einem der Ansprüche 2 bis 16, **dadurch gekennzeichnet, dass** sie außerdem eine Bremse (99, 100) aufweist, die dazu ausgelegt ist, das Abbremsen der Turbine (6) bei einer Unterbrechung ihres Drehantriebs sicherzustellen.

18. Maschine nach Anspruch 17, **dadurch gekennzeichnet, dass** die Bremse einen Stellzylinder (99) umfasst, dessen Kolbenstange mit einer Laufrolle (100) auf der Scheibe der Turbine (6) verschen ist, wobei der Zylinderstelltrieb (99) mit dem Beladungsverteiler (24) verbunden und gleichzeitig mit dem Zylinderstelltrieb (86) zum Auskuppeln beim Anhalten des Schaltgetirebes (8) gesteuert ist, um die Abbremsung der Turbine (6) auszulösen, wenn das Schaltgetriebe (8) den Todpunkt durchläuft.

FIG.1

FIG.2

EP 0 788 303 B1

FIG.3